# EUROPEAN PATENT APPLICATION

(11) **EP 4 564 518 A1**
(43) Date of publication of application: **04.06.2025**
(21) Application number: 24216466.3
(22) Date of filing: 29.11.2024
(51) Int. Cl.: H01M 10/42, H01M 10/48, H01M 50/209, H01M 50/519, H01M 50/569

(54) **BATTERY PACK AND ELECTRICITY-CONSUMPTION DEVICE**

(30) Priority: 01.12.2023 CN 202311649170
(71) Applicant: Xiamen Hithium Energy Storage Technology Co., Ltd., Xiamen, Fujian 361100 (CN)
(72) Inventor: WANG, Fujin, Xiamen, Fujian 36100 (CN); DENG, Changshui, Xiamen, Fujian 361100 (CN); JI, Minghao, Xiamen, Fujian 361100 (CN)
(74) Representative: Manitz Finsterwald Patent- und Rechtsanwaltspartnerschaft mbB

(57) **Abstract**

This disclosure discloses a battery pack, including: a battery management system; battery modules, each battery module including battery cells sequentially arranged along a length direction of the battery module; circuit boards, one circuit board being arranged at the top of each battery module, the circuit board connecting each battery cell to collect operating data from each battery cell; connector assemblies, each connector assembly including a first interface and a first plug connected to each other, one of two adjacent circuit boards being connected to the first interface, and the other one being connected to the first plug; the two adjacent circuit boards being connected to each other through the connector assembly so that the circuit boards are connected in series to form a circuit board string; the circuit board string being connected to the battery management system to transmit the operating data to the battery management system.

## Description

### TECHNICAL FIELD

The present disclosure relates to the field of battery technologies, and in particular to a battery pack, and an electricity-consumption device.

### BACKGROUND

In the related art, voltage and temperature parameters of the battery pack are usually transmitted to the Battery Management System (BMS) through a wiring harness. Specifically, one end of the wiring harness is connected to an interface end of the BMS, and the other end collects the voltage and temperature of a battery module. However, under the trend of pursuing high energy density of the battery pack, the number of battery modules inside the battery pack is constantly increasing, which leads to the space volume of the battery pack also constantly increasing. A problem with the wiring harness collection method is that not only a lager diameter of wiring harness of some battery modules makes the wiring harness occupy too much internal space of the battery pack, resulting in low utilization rate of the internal space of the battery pack and increasing the manufacturing cost of the battery pack, but also the complex wiring with numerous connections leads to poor electrical safety.

### SUMMARY

The present disclosure discloses a battery pack, including: a battery management system; a plurality of battery modules, each battery module including a plurality of battery cells sequentially arranged along a length direction of the battery module; a plurality of circuit boards, one circuit board being arranged at the top of each battery module, the circuit board connecting each battery cell in the battery module to collect operating data from each battery cell; a plurality of connector assemblies, each connector assembly including a first interface and a first plug connected to each other, one of two adjacent circuit boards being connected to the first interface, and the other one being connected to the first plug; the two adjacent circuit boards being connected to each other through the connector assembly, so that the plurality of circuit boards are connected in series to form a circuit board string; the circuit board string being connected to the battery management system to transmit the operating data of each battery cell in each battery module to the battery management system.

In a second aspect, the present disclosure discloses an electricity-consumption device, including a battery pack.

### BRIEF DESCRIPTION OF THE DRAWINGS

In order to illustrate the technical solutions in the embodiments of the present disclosure more clearly, the drawings used in the embodiments will be briefly introduced below. It is apparent that the drawings in the following descriptions are merely some embodiments of the present disclosure. For those skilled in the art, other drawings may be obtained based on these drawings without exerting creative efforts.
FIG. 1 is a plan view of a battery pack of the present disclosure;
FIG. 2 is an enlarged view of part I in FIG. 1 of the present disclosure;
FIG. 3 is an enlarged view of part II in FIG. 1 of the present disclosure;
FIG. 4 is a structural view of a battery module of the present disclosure;
FIG. 5 is an enlarged view of part III in FIG.4 of the present disclosure;
FIG. 6 is an enlarged view of part IV in FIG.4 of the present disclosure;
FIG. 7 is an enlarged view of part V in FIG.4 of the present disclosure;
FIG. 8 is a structural view of an end plate of the present disclosure;
FIG. 9 is a structural view of an electricity-consumption device of the present disclosure.

Illustration of reference signs: 1000-battery pack, 10-battery management system, 20-battery module, 20a-first battery module, 20b-second battery module, 21-end plate, 211-first circuit board fixing seat, 212-second circuit board fixing seat, 22-battery cell, 23-connector, 24-binding tape, 25-positioning pin, 30-circuit board, 301-collection component, 302-reinforcement plate, 30a-first circuit board, 31-first rigid connecting portion, 311-adapter, 3111-second interface, 3112-second plug, 32-second rigid connecting portion, 33-flexible connecting portion, 30b-second circuit board, 35-flexible bending portion, 36- clearance hole, 40-connector assembly, 41-first interface, 42-first plug, 50- wire, 60-circuit board support, 61-support portion, 62-wing plate portion, 621-positioning strip, 63-positioning portion, 70-housing, 2000-electricity-consumption device.

### DETAILED DESCRIPTION

The following clearly and completely describes the technical solutions in the embodiments of the present disclosure with reference to the accompanying drawings in the embodiments of the present disclosure. Apparently, the described embodiments are some rather than all of the embodiments of the present disclosure. All other embodiments obtained by persons of ordinary skill in the art based on the embodiments of the present disclosure without creative efforts fall within the protection scope of the present disclosure.

In the present disclosure, the terms such as "upper", "lower", "left", "right", "front", "rear", "top", "bottom", "inner", "outer", "vertical", "horizontal", "lateral", and "longitudinal" indicate orientation or position relationship based on the orientation or position relationship illustrated in the drawings. These terms are primarily intended to better describe the present disclosure and its embodiments and are not used to define the indicated device, element or component must have a particular orientation, or be constructed and operated in a particular orientation.

Moreover, the above partial terms may be used to indicate other meanings in addition to the orientation or position relationship, for example, the term "upper" may also be used to indicate a certain dependency or connection relationship in some cases. To those of ordinary sill in the art, the specific meaning of the above terms in the present disclosure can be understood in the specific circumstances.

In additional, the terms "installation", "set up", "dispose with", "connection", "connect to" should be understood in a broad sense. For example, they can be fixed connection, detachable connection, or integrated connection; they can be mechanical connection, or electrical connection; they can be directly connection, or they can be indirectly connection through an intermediate media, or they can be internal connection between two devices, two elements or two components. For those of ordinary skill in the art, the specific meaning of the above terms in the present disclosure can be understood according to the specific circumstances.

In additional, the terms such as "the second", "the first" are primarily used to differentiate different devices, elements or components (specific types and constructions may be the same of different), and are not used to indicate or imply the relative importance and quantity of the indicated device, element or component. Unless otherwise stated, "plurality" means two or more.

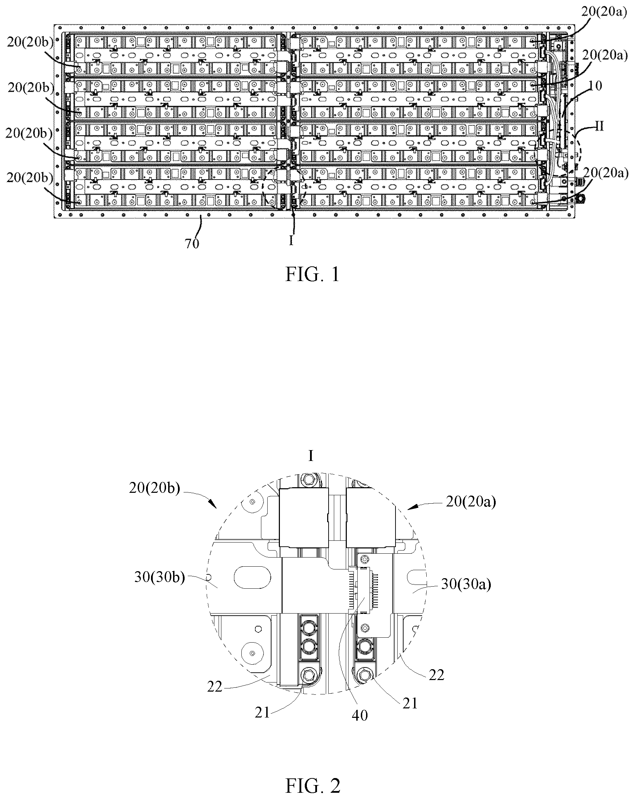

In the related art, voltage and temperature parameters of a battery pack are usually transmitted to the Battery Management System (BMS) through a wiring harness. However, a voltage and temperature collection terminal of a battery module is often positioned far away from the interface terminal of the BMS, which requires the wiring harness to have sufficient length, which leads to the wiring harness occupying too much internal space of the battery pack, resulting in a low utilization rate of the internal space of the battery space and a large number of wiring harness arrangements, complicated wiring harness and poor electrical safety. Therefore, the technical solution of the present disclosure is described below with reference to Fig. 1 to Fig. 9.

Referring to Fig. 1, Fig. 4 and Fig. 5, the present disclosure discloses a battery pack, including a battery management system 10, a plurality of battery modules 20, a plurality of circuit boards 30 and a plurality of connector assemblies 40. The battery management system is also called the "brain" of a battery operating system, to send and receive information of the battery and each external port, and then to transmit the work command after in-depth analysis and processing of information.

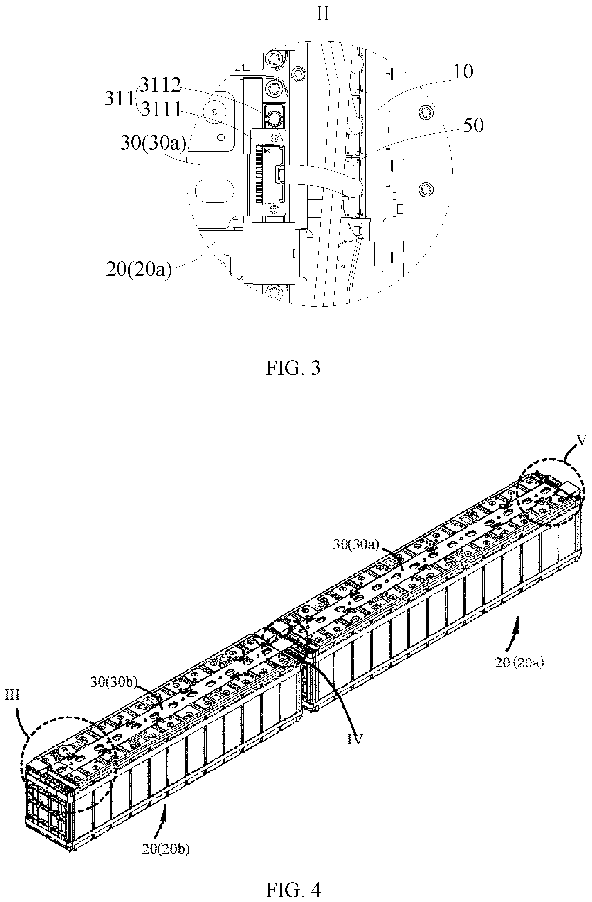

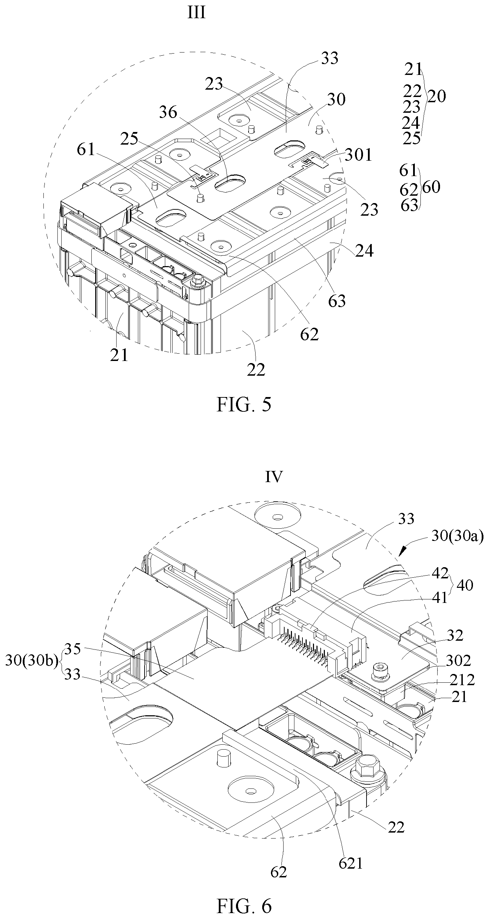

As illustrated in Fig. 4 and Fig. 5, the battery module 20 is an energy storage component in the battery pack. Each battery module 20 includes a plurality of battery cells 22 sequentially arranged along a length direction of the battery module 20. End plates 21 are respectively provided at two end portions of the battery module 20 along a length direction of the battery module 20. The plurality of battery cells 22 are located between the two end plates 21. A plurality of connectors 23 are arranged at the top of the battery module 20 and adjacent to the circuit board 30. Each connector 23 is electrically connected to a positive terminal of one of adjacent two battery cells 22 and a negative terminal of the other one of the adjacent two battery cells 22, to connect the plurality of battery cells 22 in series, thereby meeting the operational requirements of the battery module 20. The battery module20 also includes a binding tape 24. The binding tape 24 encircles the two end plates 21 and the plurality of battery cells 22 to realize binding of the plurality of battery cells 22, so as to stabilize the structure of the formed battery module 20. The battery pack can be provided with the plurality of battery modules 20, and the battery modules 20 can be arranged in sequence to form a module string. The module string can extend along a length direction of the battery pack.

The circuit boards 30 correspond one-to-one with the battery modules 20. One circuit board 30 is arranged at the top of each battery module 20. The circuit board 30 is connected to each battery cell 22 in the battery module 20 to collect operating data from each battery cell 22. Specifically, the plurality of connectors 23 as illustrated in Fig. 5 are arranged on both sides of the top of the battery module 20. The circuit board 30 is arranged at the middle of the top of the battery module 20. The connectors 23 are arranged on both sides of the circuit board 30 in the width direction of the circuit board 30, and are arranged at intervals along the length direction of the circuit board 30. The circuit board 30 is electrically connected to the connectors 23 via collection components 301, and the collection components 301 are connected to the connectors 23 in one-to-one correspondence. The circuit board 30 collects operating data from each battery cell 22 through the collection component 301. The operation data is selected from the group consisting of voltage data, current data, and temperature data.

As illustrated in Fig. 6, the connector assembly 40 includes a first interface 41 and a first plug 42. One of two adjacent circuit boards is connected to the first interface 41, and the other one is connected to the first plug 42. The two adjacent circuit boards 30 are connected to each other through the connector assembly 40 so that the plurality circuit boards 30 are connected in series to form a circuit board string.

The circuit board string is connected to the battery management system 10 to transmit the operating data such as voltage data, current data and temperature data of each battery cell 22 in the battery module 20 to the battery management system 10. Compared with the collection method through the wiring harness, the collection method through the circuit board 30 is more space-saving, cost-effective and more reliable connection. Occupying smaller space is conducive to improving the space utilization rate inside the battery. At the same time, compared with the complex wiring harness layout, it can improve the safety of the electricity.

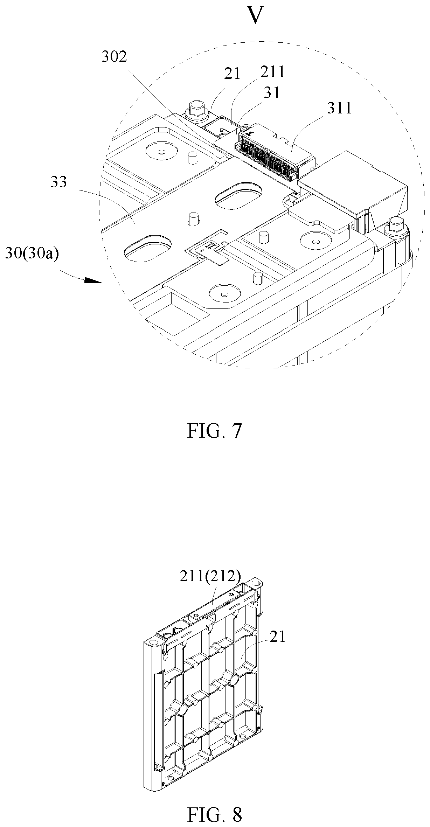

Alternatively" as illustrated in Fig. 4 and Fig. 7, the circuit board 30 connected with the battery management system 10 has a first rigid connecting portion 31 at one end of the circuit board 30 facing the battery management system 10. The first rigid connecting portion 31 includes an adaptor 311, which is connected to the battery management system 10 via a wire 50. The provision of the first rigid connecting portion 31 can strengthen the rigidity of the end position of the circuit board 30, so that the end of the circuit board 30 has better structural stability, thereby ensuring that the structure of the circuit board 30 is resistant to deformation.

Alternatively, as illustrated in Fig. 1 and Fig. 3, the adaptor 311 includes a second interface 3111 and a second plug 3112 connected with each other. The second interface 3111 or the second plug 3112 is provided on the wire 50, so that the connection and detachment of the wire 50 and the first rigid connecting portion 31 are facilitated through the detachable design between the wire 50 and the adaptor 311.

Alternatively" as illustrated in Fig. 4 and Fig. 7, the end plate 21 of the battery module 20 adjacent to the battery management system 10 corresponding to the circuit board 30 provided with the first rigid connecting portion 31, is provided with a first circuit board fixing seat 211 connected with the first rigid connecting portion 31. The first circuit board fixing seat 211 can be connected to the end plate 21 through a pin or the like. The first rigid connecting portion 31 can be connected to the first circuit board fixing seat 211 through a bolt or other fastening types, further ensuring the connection stability of the circuit board 30.

Alternatively" as illustrated in Fig. 4, Fig. 6 and Fig. 7, one end of one circuit board 30 facing adjacent another circuit board 30 is provided with a second rigid connecting portion 32. The second rigid connecting portion 32 is connected to the another circuit board 30 through the connector assembly 40. The arrangement of the second rigid connecting portion 32 can also strengthen the rigidity of the end position of the circuit board 30, so that the end of the circuit board 30 has better structural stability.

Alternatively" as illustrated in Fig. 6, one of the end plates 21 of the battery module (20) away from the battery management system 10 corresponding to the circuit board 30 provided with the second rigid connecting portion 32, a top of which is provided with a second circuit board fixing seat 212 connected with the second rigid connecting portion 32. The structure of the second circuit board fixing seat 212 can be the same as or different from the first circuit board fixing seat 211). The second circuit board fixing seat 212 can also be connected to the end plate 21 by means such as a pin. The second rigid connecting portion 32 can be connected to the second circuit board fixing seat 212 by means such as a bolt, further ensuring the connection stability of the circuit board 30.

More specifically, the battery module 20 adjacent to the battery management system 10 is a first battery module 20a. The circuit board 30 provided on the first battery module 20a is a first circuit board 30a. The middle part of the first circuit board 30a is a flexible connecting portion 33. The two ends of the first circuit board 30a are respectively the first rigid connecting portion 31 and the second rigid connecting portion 32 connected to the flexible connecting portion 33. The flexible connecting portion 33 is connected to each battery cell 22 of the first battery module 20a, so that the first circuit board 30a can ensure flexibility while ensuring rigidity at both ends, thereby ensuring the connection stability with the adjacent circuit board 30 and the wire 50.

One of the end plates 21 of the first battery module 20a is provided with a first circuit board fixing seat 211 to connect to the first rigid connecting portion 31, and the other is provided with a second circuit board fixing seat 212 to connect to the second rigid connecting portion 32, thereby ensuring connection stability.

Alternatively, one circuit board 30 has a flexible bending portion 35 at one end of the one circuit board 30 facing adjacent another circuit board 30. The flexible bending portion 35 is suspended above installation reserved mounting gap between the two adjacent battery modules 20, and the flexible bending portion 35 connects to the another circuit board 30 through the connector assembly 40. The flexible bending portion 35 makes the circuit board 30 has a flexible deformation part. Aposition or shape of the flexible bending portion 35 can be adjusted to accommodate changes in position or distance between the two adjacent battery modules 20, thus facilitating the connection of the two adjacent battery modules 20. At the same time, the circuit board 30 can reserve a redundant part through the flexible bending 35 to prevent the connection failure between the two interconnected circuit boards 30 caused by mutual pulling due to abnormal shaking of the battery pack and other external factors.

Alternatively, as illustrated in Fig. 4 and Fig. 6, one of the end plates 21 of the battery module 20 corresponding to the one circuit board 30 having the flexible bending portion 35, is spaced apart from the flexible bending portion 35 in the height direction of the battery module 20. This can prevent the end plate 21 from squeezing and interfering with the flexible bending portion 35, and reserve enough space for the flexible bending portion 35 to fully deform to adapt to the changes in position or distance between the adjacent battery modules 20.

More specifically, the battery module 20 includes a first battery module 20a and a second battery module 20b sequentially arranged along the length direction of the battery pack. The circuit board 30 includes the first circuit board 30a arranged at the top of the first battery module 20a and the second circuit board 30b arranged at the top of the second battery module 20b. The second circuit board 30b includes a flexible connecting portion 33 and a flexible bending portion 35 connected to each other. The flexible bending portion 33 of the second circuit board 30b is connected to each battery cell 22 of the second battery module 20b, and the second circuit board 30b is connected to the first circuit board 30a through the flexible bending portion 35 and the connector assembly 40.

Furthermore, as mentioned above, the battery pack in this disclosure can be formed into a module string by only two battery modules 20, that is, the aforementioned first battery module 20a and the second battery module 20b are sequentially arranged to form the module string. The battery pack can have a plurality of module strings arranged side by side to ensure the capacity of the battery pack. The top of the first battery module 20a is provided with the first circuit board 30a, and the first circuit board 30a is rigidly reinforced at both ends to ensure good connection stability with the first battery module 20a, the wire 50 and the second circuit board 30b. The top of the second battery module 20b is provided with the second circuit board 30b. The second circuit board 30b is flexible and adjustable through the flexible bending portion 35 to ensure the connection effectiveness between the second circuit board 30b and the first circuit board 30a, and to prevent the connection failure between the second circuit board 30b and the first circuit board 30a by the redundant part reserved by the flexible bending portion 35.

Alternatively, the module string may also include three or more battery modules 20, such as a plurality of first battery modules 20a and one second battery module 20b, or one first battery module 20a and a plurality of second battery modules 20b, etc., which are not described in detail here.

Alternatively, as illustrated in Figs. 4 to 6, the battery pack also includes a plurality of circuit board supports 60. One circuit board support 60 is arranged at the top of each battery module 20. The circuit board support 60 includes a support portion 61 and a wing portion 62 connected to each other. The support portion 61 is arranged between the circuit board 30 and the battery module 20. The wing portion 62 is staggered with the circuit board 30. The support portion 61 provides a structural support to the circuit board 30 to maintain the structural stability and deformation resistance of the circuit board 30.

Alternatively, as illustrated in Figs 4 to 6, the support portion 61 is arranged between the flexible connecting portion 33 of circuit board 30 and the battery module 20. The wing portion 62 has a positioning strip 621 at a side closer to the flexible bending portion 35 of the circuit board 30. The positioning trip 621 extends towards the circuit board 30 to position the circuit board 30 along the width direction of the battery pack. More specifically, for the second circuit board 30b, the wing portion 62 can achieve prepositioning of the flexible bending portion 35 through the positioning strip 621, facilitating its rapid connection to the first circuit board 30a.

Alternatively, the wing portion 62 has a positioning portion 63 extending from the top of the battery module 20 to the bottom of the battery module 20 at an edge of the wing plate 62 away from the support portion 61. The positioning portion 63 is configured to position the battery cells 22 in the battery module 20 in the width direction of the battery pack. The positioning portion 63 can work with the binding tape 24 to further fix the position of the battery cells 22, preventing the battery cells 22 from abnormal shaking and detaching from the original positions, thereby ensuring the overall structural stability of the battery module 20.

Alternatively, as illustrated in the Fig. 5, a top of the battery module 20, adjacent to the circuit board 30, is provided with a positioning pin 25, the circuit board 30 has a positioning hole. The positioning pin 25 are positioned through the positioning holes. In this way, the abnormal sliding of the circuit board 30 can be prevented, especially to prevent the circuit board 30 from creeping along the length direction of the battery pack. Furthermore, the positioning pins 25 can be set multiple along the length direction of the battery pack, and the positioning holes on the circuit board 30 are set multiple, with multiple positioning holes corresponding to multiple positioning pins 25 one by one to improve the positioning effect.

Alternatively, as illustrated in Fig. 5, the circuit board 30 has a plurality of clearance holes 36, and the plurality of clearance holes 36 correspond one- to- one with a plurality of explosion-proof valves arranged on the plurality of battery cells 22 in the battery module 20, to reserve the pressure relief space required by the explosion-proof valve when the battery cells 22 need to release pressure.

Alternatively, the circuit boards 30 are flexible circuit boards, the overall material of which is soft and easy to layout, and the wire diameter of which is small to save layout space.

Alternatively, the plurality of battery modules 20 are arranged in an array. The plurality of circuit boards 30 are arranged in an array. The plurality of circuit boards 30 in the same column connected in series to form a circuit board string. Circuit board strings are arranged in parallel at intervals along the width direction of battery pack. The battery management system 10 is connected in parallel with the plurality of circuit board strings, so that the battery pack has a larger storage capacity and can effectively collect working condition data such as voltage data, current data and temperature data.

Alternatively, the battery pack may further include a housing 70. The battery management system 10, the battery modules 20 and the circuit boards 30 are all arranged in the housing 70. The housing 70 provides mounting basis and masking protection for related components of the battery pack.

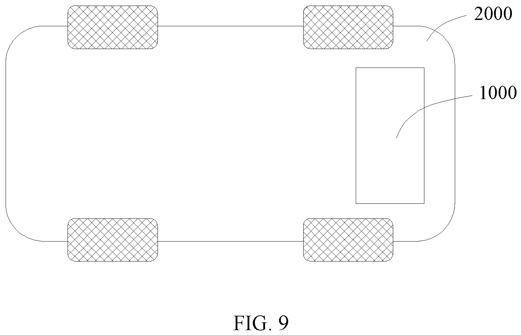

The disclosure also discloses an electricity-consumption device, which includes the aforementioned battery pack 1000. The electricity-consumption device can be an electric vehicle, electric toy, electric tool, electric car, ship and spacecraft, mobile phone, portable device, personal digital assistant (PDA), laptop computer, etc. Taking a vehicle 2000 shown in Fig. 9 as an example, the battery pack 1000 can be installed in the vehicle to power it, further details are not provided here.

It should be noted that the foregoing examples are provided solely for the purpose of illustrating the technical solutions of the present invention and are not intended as limitations. Although a detailed description of the present invention has been provided with reference to the aforementioned examples, those skilled in the art should understand that they may still modify the technical solutions disclosed in the aforementioned examples, or make equivalent substitutions for some or all of the technical features; and such modifications or substitutions do not cause the essence of the corresponding technical solutions to deviate from the scope of the technical solutions of the present invention as illustrated in the examples.

## Claims

1. A battery pack, comprising:
a battery management system (10) ;
a plurality of battery modules (20), each battery module (20) comprising a plurality of battery cells (22) sequentially arranged along a length direction of the battery module (20);
a plurality of circuit boards (30), one circuit board (30) being arranged at the top of each battery module (20), the circuit board (30) connecting each battery cell (22) in the battery module (20) to collect operating data from each battery cell (22);
a plurality of connector assemblies (40), each connector assembly (40) comprising a first interface (41) and a first plug (42) connected to each other, one of two adjacent circuit boards (30) being connected to the first interface (41), and the other one being connected to the first plug (42); the two adjacent circuit boards (30) being connected to each other through the connector assembly (40) , so that the plurality of circuit boards (30) are connected in series to form a circuit board string; and
the circuit board string being connected to the battery management system (10) to transmit the operating data of each battery cell (22) in each battery module (20) to the battery management system (10).

2. The battery pack of claim 1, wherein a plurality of connectors (23) are arranged at the top of the battery module (20) and adjacent to the circuit board, each connector (23) is electrically connected to a positive terminal of one of adjacent two battery cells (22) and a negative terminal of the other one of the adjacent two battery cells (22), to connect the plurality of battery cells (22) in series;
the circuit board (30) is arranged at the middle of the top of the battery module (20), the connectors (23) are arranged on both sides of the circuit board (30) in a width direction and arranged at intervals along a length direction of the circuit board (30), the circuit board (30) is electrically connected to the connectors (23) via collection components, and the collection components (301) are connected to the connectors (23) in one-to-one correspondence; and
the circuit board (30) collects operating data from each battery cell (22) through the collection components (301).

3. The battery pack of claim 1, wherein each battery module (20) comprises end plates (21) and a binding tape(24);
the end plates (21) are respectively provided at two end portions of the battery module (20) along the length direction of the battery module (20); the plurality of battery cells (22) are located between the two end plates (21), and the binding tape (24) encircles the two end plates (21) and the plurality of battery cells (22).

4. The battery pack of claim 4, wherein the circuit board (30) connected with the battery management system (10) has a first rigid connecting portion (31) at one end of the circuit board (30) facing the battery management system (10);
the first rigid connecting portion (31) comprises an adapter (311), and the adapter (311) is connected to the battery management system (10) via a wire (50);
the adapter (311) comprises a second interface (3111) and a second plug (3112) connected to each other; and
the second interface (3111) or the second plug (3112) is connected to the wire (50).

5. The battery pack of claim 5, wherein the end plate (21) of the battery module (20) adjacent to the battery management system (10) corresponding to the circuit board (30) provided with the first rigid connecting portion (31), is provided with a first circuit board fixing seat (211) connected with the first rigid connecting portion (31).

6. The battery pack of claim 5, wherein one end of one circuit board (30) facing adjacent another circuit board (30) is provided with a second rigid connecting portion (32), and the second rigid connecting portion (32) is connected to the another circuit board (30) through the connector assembly (40).

7. The battery pack of claim 8, wherein one of the end plates (21) of the battery module (20) away from the battery management system (10) corresponding to the circuit board (30) provided with the second rigid connecting portion (32), a top of which is provided with a second circuit board fixing seat (211) connected with the second rigid connecting portion (32).

8. The battery pack of claim 5, wherein one circuit board (30) has a flexible bending portion (35) at one end of the one circuit board (30) facing adjacent another circuit board (30);
the flexible bending portion (35) is suspended above a reserved mounting gap between the two adjacent battery modules (20), and the flexible bending portion (35) connects to the another circuit board (30) through the connector assembly(40).

9. The battery pack of claim 10, wherein one of the end plates (21) of the battery module (20) corresponding to the one circuit board (30) having the flexible bending portion (35), is spaced apart from the flexible bending portion (35) in the height direction of the battery module (20).

10. The battery pack of claim 1, further comprising a plurality of circuit board supports (60), one circuit board support (60) is arranged at the top of each battery module (20);
the circuit board support (60) comprising a support portion (61) and a wing portion (62) connected to each other;
wherein the support portion (61) is arranged between the circuit board (30) and the battery module (20), and the wing portion (60) is staggered with the circuit board (30).

11. The battery pack of claim 12, wherein the support portion (61) is arranged between the circuit board (30) and the battery module (20), and the wing plate portion (62) has a positioning strip (621) on a side closer to the circuit board (30), the positioning strip (621) extends towards the circuit board (30) to position the circuit board (30) along the width direction of the battery module (20).

12. The battery pack of claim 13, wherein the wing portion (62) has a positioning portion (63) extending from the top of the battery module (20) to the bottom of the battery module (20) at an edge of the wing plate (62) away from the support portion (61), and the positioning portion (63) is configured to position the battery cells (22) in the battery module (20) in the width direction of the battery pack.

13. The battery pack of claim 1, wherein a top of the battery module (20), adjacent to the circuit board (30), is provided with positioning pins (25);
the circuit board (30) has positioning holes, and the positioning pins (25) are positioned through the positioning holes.

14. The battery pack of claim 1, wherein the circuit board (30) has a plurality of clearance holes (36), and the plurality of clearance holes (36) correspond one-to-one with a plurality of explosion-proof valves arranged on the plurality of battery cells (22) in the battery module (20).

15. An electricity-consumption device, comprising a battery pack as claimed in any one of claims 1 to 19.
